(19) Europäisches Patentamt
European Patent Office
Office européen des brevets

(11) Veröffentlichungsnummer: **0 038 463**
A2

(12) # EUROPÄISCHE PATENTANMELDUNG

(21) Anmeldenummer: **81102597.2**

(22) Anmeldetag: **07.04.81**

(51) Int. Cl.³: **C 08 J 9/34**
B 29 D 27/04
//C08L75/04

(30) Priorität: **12.04.80 DE 3014161**

(43) Veröffentlichungstag der Anmeldung:
**28.10.81 Patentblatt 81/43**

(84) Benannte Vertragsstaaten:
**DE FR GB IT**

(71) Anmelder: **BASF Aktiengesellschaft**
**Carl-Bosch-Strasse 38**
**D-6700 Ludwigshafen(DE)**

(72) Erfinder: **Horacek, Heinrich, Dr.**
**Londoner Ring 11**
**D-6700 Ludwigshafen(DE)**

(72) Erfinder: **Marx, Matthias, Dr.**
**Seebacher Strasse 49**
**D-6702 Bad Duerkheim(DE)**

(72) Erfinder: **Hobein, Dietmar**
**Moerkingerweg 16**
**D-8031 Neu-Estingen(DE)**

(54) **Verfahren zur Herstellung von Polyurethan-Formkörpern.**

(57) Zur Herstellung von Polyurethan-Formkörpern mit einer lichtechten Polyurethan-Außenhaut und einem -Schaumstoffkern werden die Aufbaukomponenten zur Bildung der Außenhaut

a) vorzugsweise gegebenenfalls urethan-, biuret- oder isocyanuratgruppenhaltige aliphatische und/oder cycloaliphatische Polyisocyanate,
b) Polyole,
c) vorzugsweise Diole und/oder Triole mit Molekulargewichten von 60 bis 600 als Kettenverlängerungsmittel,
d) aliphatische und/oder cycloaliphatische primäre oder sekundäre Diamine, vorzugsweise in Mengen von 0,1 bis 50 Gew.%, bezogen auf (b) und (c) und
e) Katalysatoren sowie gegebenenfalls Hilfs- und Zusatzstoffe

nach dem one-shot-Verfahren in Abwesenheit von Lösungsmitteln für Polyurethane intensiv, vorteilhafterweise mit Hilfe eines statischen Mischers, gemischt, die Mischung auf die Innenwand eines offenen Formwerkzeugs in einer zur Bildung der Außenhaut des Formkörpers ausreichenden Schichtstärke, vorzugsweise 0,5 bis 5 mm, aufgebracht und danach die den Schaumstoffkern bildende schaumfähige Polyurethanmasse in das Formwerkzeug eingefüllt und aufschäumen gelassen.

EP 0 038 463 A2

Croydon Printing Company Ltd.

Verfahren zur Herstellung von Polyurethan-Formkörpern

Die Erfindung betrifft ein Verfahren zur Herstellung von Formkörpern mit einer lichtechten Polyurethan-Außenhaut und einem -Schaumstoffkern in einem offenen Formwerkzeug, wobei die Bestandteile - Polyisocyanate, Polyole, Kettenverlängerungsmittel, aliphatische und/oder cycloaliphatische Diamine und Katalysatoren - zur Bildung der Außenhaut nach dem one-shot-Verfahren in Abwesenheit von Lösungsmitteln gemischt und die Mischung auf die Innenwand des Formwerkzeugs, vorzugsweise durch Sprühen, aufgebracht wird.

Die Herstellung von vernetzten Kunststoffen nach dem Isocyanat-Polyadditionsverfahren ist bekannt. Nach Angaben der DE-AS 11 96 864 werden hierzu Hydroxylgruppen aufweisende Verbindungen und Polyisocyanate in Gegenwart von Treibmitteln und Katalysatoren in Formen verschäumt.

Bei geeigneter Wahl der Hydroxylgruppen aufweisenden Polyester, Polyether, Polyesteramide u.a. und organischen Polyisocyanate sowie durch zusätzliche Mitverwendung von Kettenverlängerungsmitteln, wie Glykolen oder Diaminen, können nach dieser Methode sowohl elastische wie starre Polyurethanelastomere sowie alle dazwischen liegenden Modifikationen hergestellt werden.

Zur Herstellung der Polyurethanelastomeren werden nach DE-PS 831 604 aus den hydroxylgruppenhaltigen Verbindungen und Polyisocyanaten zunächst NCO-Gruppen haltige Präpolymere hergestellt, die dann in einer zweiten Stufe mit dem Kettenverlängerungsmittel zum hochmolekularen Elastomeren umgesetzt werden.

Diamine als Kettenverlängerungsmittel konnten im allgemeinen nicht nach dem one-shot-Verfahren verarbeitet werden. Nach Angaben der DE-AS 11 49 523 werden den flüssigen NCO-Gruppen haltigen Präpolymeren kristalline aromatische diprimäre Diamine in einer zur Absättigung der Isocyanatgruppen unzureichenden Menge bei einer unter dem Schmelzpunkt der Diamine liegenden Temperatur einverleibt und danach die Massen durch Wärmezufuhr ausgehärtet. Gemäß DE-PS 12 40 654 werden die NCO-Gruppen haltigen Präpolymeren bei Raumtemperatur oder mäßig erhöhten Temperaturen mit solchen flüssigen oder gelösten aromatischen Diaminen umgesetzt, die in ortho-Stellung zur ersten Aminogruppe mindestens einen linearen Alkylsubstituenten und zur zweiten Aminogruppe zwei lineare Alkylsubstituenten mit 1 bis 3 C-Atomen aufweisen.

Zur Herstellung einer flexiblen Oberflächenschicht werden nach DE-OS 18 16 554 Lösungen von isocyanatgruppenhaltigen Präpolymeren und Diaminlösungen vermischt und auf das Substrat, beispielsweise die Innenwand eines Formwerkzeugs, aufgesprüht. Nach dem Verdunsten des Lösungsmittels erhält man einen Polyurethan-Polyharnstoff-Überzug.

Lichtechte Polyurethan-Formkörper können ferner beispielsweise nach folgenden Verfahren hergestellt werden:

(1) Durch Verschäumen von Integralschaumstoff-Formulierungen auf Basis von aliphatischen Polyisocyanaten, z.B. analog DE-OS 27 10 901. Nachteilig an dieser Methode ist, daß teure aliphatische Polyisocyanate in großen Mengen verbraucht werden und außerdem eine farbschlierenfreie, gleichmäßig ungeschäumte Oberfläche nur selten erreicht wird.

(2) Durch Lackieren von fertigen Schaumstoff-Formkörpern mit Polyurethanlacken. Bei dieser Arbeitsweise treten im allgemeinen Haftprobleme zwischen Oberflächenschicht und Schaumstoffkern auf, da der fertige Schaumstoffkern immer Reste von Formtrennmittel an der Oberfläche aufweist, so daß die Lackschicht nur schlecht haftet. Bei dickeren Schichten ist außerdem keine formgetreue Abbildung der Oberfläche des Schaumstoffkerns gewährleistet. Dies ist vor allem dann störend, wenn die Oberflächenstruktur des Schaumstoffkerns, beispielsweise eine Ledernarbung, sichtbar bleiben soll.

(3) Durch "in-mould-coating", d.h. durch Beschichten der Innenwand des Formwerkzeugs mit lichtechten, lösungsmittelhaltigen Polyurethansystemen. Bei dieser Verfahrensweise sind die kostspieligen Trocknungsstufen von Nachteil, die lange Zykluszeiten und eine starke Umweltbelastung verursachen können. Bisher konnten lösungsmittelfreie Polyurethanformulierungen, die lichtechte Oberflächen bilden, wegen der Reaktionsträgheit aliphatischer Polyisocyanate nicht nach dem Zweikomponenten-Verfahren versprüht werden, weil das über lange Zeit dünnflüssige System an den senkrechten Formwänden abläuft und sich in den waagrechten Formteilen sammelt. Es gelang daher nicht, einheitliche Beschichtungen mit konstanter Schichtdicke herzustellen.

Die Aufgabe der vorliegenden Erfindung bestand darin, Polyurethanschaumstoffkerne mit einer lichtechten Außenhaut mit einer Schichtdicke von mindestens 0,5 mm zu beschichten. Die Schichtdicken der Außenhaut sollten möglichst konstant und die Aushärtezeiten kurz, d.h. kleiner als 5 Minuten, sein.

Diese Aufgabe konnte überraschenderweise gelöst werden durch ein Verfahren zur Herstellung von Formkörpern mit einer lichtechten Polyurethan-Außenhaut und einem -Schaumstoffkern in einem offenen Formwerkzeug, das dadurch gekennzeichnet ist, daß man nach dem one-shot-Verfahren in Abwesenheit von Lösungsmitteln für Polyurethane

a) organische Polyisocyanate,
b) Polyole,
c) Kettenverlängerungsmittel,
d) aliphatische und/oder cycloaliphatische, primäre oder sekundäre Diamine,
e) Katalysatoren sowie ggf. Hilfs- und Zusatzstoffe

intensiv mischt, die Mischung auf die Innenwand des offenen Formwerkzeugs in einer zur Bildung der Außenhaut des Formkörpers ausreichenden Schichtdicke aufbringt und danach die den Schaumstoffkern bildende schaumfähige Polyurethanmasse in das Formwerkzeug einfüllt und aufschäumen läßt.

Durch die Mitverwendung von hochreaktiven aliphatischen und/oder cycloaliphatischen primären oder sekundären Diaminen neben Polyolen und Kettenverlängerungsmitteln werden in Kombination mit gegebenenfalls modifizierten aliphatischen und/oder cycloaliphatischen Polyisocyanaten in Abwesenheit von Lösungsmitteln Polyurethansysteme erhalten, die Startzeiten bis herab zu Sekundenbruchteilen aufweisen. Der Übergang von der flüssigen in die feste Phase erfolgt nahezu augenblicklich. Dies führt dazu, daß das flüssige Reaktionsgemisch nach dem Aufsprühen an der Innenwand des Formwerkzeugs praktisch sofort zu einer lichtechten Außenhaut erstarrt. Ein Abfließen des Reaktionsgemisches von den Seitenwänden des Formwerkzeugs, das bei diaminfreien Polyurethansystemen oder lösungsmittelhaltigen Prepolymere-Diaminsystemen üblicherweise beobachtet wird, erfolgt nicht. Das erfindungsgemäße Verfahren erlaubt es, 0,5 bis 5 mm dicke oder noch dickere Außenschichten in Abhängigkeit von der Temperatur des Formwerkzeugs in Aushärtezeiten von weniger als 5 Sekunden bis ungefähr 3 Minuten herzustellen. Die den Schaumstoffkern bildende, schaumfähige Polyurethanmasse kann unmittelbar nach dem Erstarren der Außenhaut in das beschichtete Formwerkzeug eingefüllt werden, so daß die Formkörper in sehr kurzen Zykluszeiten hergestellt werden können.

Zu den für das erfindungsgemäße Verfahren verwendbaren Ausgangskomponenten ist folgendes auszuführen:

Erfindungsgemäß verwendbare organische Polyisocyanate (a) besitzen die Formel $R(NCO)_n$, worin R mehrwertige, ggf. urethan-, biuret- und/oder isocyanuratgruppenhaltige aliphatische oder cycloaliphatische Reste oder gemischte Reste dieser Art und n eine ganze Zahl bedeuten, deren Wert der Valenzzahl von R entspricht und wenigstens 2, vorzugsweise 2 bis 3, beträgt. Im einzelnen seien beispielhaft genannt: aliphatische Diisocyanate, wie Ethylendiisocyanat, Propylen-1,2-diisocyanat, Butylen-1,4-diisocyanat, 2,2,4-Trimethylhexamethylen-1,6-diisocyanat und vorzugsweise Hexamethylen-1,6-diisocyanat, cycloaliphatische Diisocyanate, wie Cyclohexan-1,2-diisocyanat, Cyclohexan-1,4-diisocyanat, 1-Methylcyclohexan-2,4- und 2,6-diisocyanat sowie die entsprechenden Isomerengemische, 4,4'-, 2,4'- und 2,2'-Dicyclohexylmethan-diisocyanat sowie die entsprechenden Isomerengemische und vorzugsweise 3-Isocyanatomethyl-3,5,5-trimethylcyclohexylisocyanat (Isophoron-diisocyanat) und Polyisocyanate, wie Polycyclohexyl-polymethylen-polyisocyanate mit 2 bis 6, vorzugsweise 3 Cyclohexylenresten im Molekül.

In Betracht kommen ferner isocyanurat-, biuret- und insbesondere urethangruppenhaltige Polyisocyanate sowie deren Gemische, hergestellt auf Basis aliphatischer oder cycloaliphatischer Diisocyanate. Die Herstellung isocyanuratgruppenhaltiger Polyisocyanate, die vorzugsweise NCO-Gehalte von 15 bis 30 Gew.% besitzen, wird u.a. beschrieben in den DE-PS 10 22 789, 12 22 067 und 10 27 394 sowie den DE-OS 19 29 034 und 20 04 048. Biuretgruppenhaltige Polyisocyanate besitzen NCO-Gehalte von 30 bis 15, vorzugsweise von 25 bis 20 Gew.-% und Viskositäten von 6000 bis 500, vorzugsweise von 4000 bis 1000 mPas bei 20°C und werden beispielsweise beschrieben in der DE-PS 11 01 394 und der DE-OS 22 61 065. Urethangruppenhaltige Polyisocyanate können beispielsweise erhalten werden durch Umsetzung der obengenannten aliphatischen oder cycloaliphatischen Diisocyanate, vorzugsweise durch Umsetzung von Hexamethylen-diisocyanat und Isophorondiisocyanat mit gegebenenfalls substituierten oder modifizierten Alkandiolen mit 2 bis 10, vorzugsweise 2 bis 6 Kohlenstoffatomen im Alkylenrest, wie Äthylenglykol, Butandiol-1,4, Dipropylenglykol, Hexandiol-1,6 und Neopentylglykol, sowie Hydroxypivalinsäureneopentylglykol oder deren Gemische, im Molverhältnis von ungefähr 2 : 1.

Vorzugsweise zur Anwendung kommen aliphatische und cycloaliphatische Diisocyanate, insbesondere Hexamethylen- und Isophorondiisocyanat sowie urethangruppenhaltige Diisocyanate und biuretgruppenhaltige Polyisocyanate auf Hexamethylen- oder Isophorondiisocyanatbasis. Werden Polyisocyanate oder Mischungen aus Di- und Polyisocyanaten eingesetzt, so hat es sich als vorteilhaft erwiesen, wenn deren Funktionalität von 2 bis 3, vorzugsweise 2 bis 2,5 beträgt.

Als Polyole (b) werden bei dem erfindungsgemäßen Verfahren vorzugsweise übliche lineare und/oder verzweigte, d.h. di- bis hexafunktionelle, vorzugsweise di- bis tetrafunktionelle Polyesterole und insbesondere Polyetherole mit Molekulargewichten von 1000 bis 8000 und vorzugsweise 2000 bis 7000, verwendet. In Betracht kommen jedoch auch andere hydroxylgruppenhaltige Polymere mit den genannten Molekulargewichten, beispielsweise Polyesteramide, Polyacetale, wie Polyoxymethylene und Butandiol-formale, Polybutadiene und Polycarbonate, insbesondere solche, hergestellt aus Diphenylcarbonat und Hexandiol-1,6 durch Umesterung.

Geeignete Polyesterole können beispielsweise aus Dicarbonsäuren, vorzugsweise aliphatischen Dicarbonsäuren, mit 2 bis 12, vorzugsweise 4 bis 8 Kohlenstoffatomen im Alkylenrest und mehrwertigen Alkoholen, vorzugsweise Diolen hergestellt werden. Genannt seien beispielhaft aliphatische Dicarbonsäuren, wie Bernsteinsäure, Glutarsäure, Pimelinsäure, Undecandisäure, Dodecandisäure und vorzugsweise Adipinsäure und aromatische Dicarbonsäuren, wie Phthalsäure und Terephthalsäure. Beispiele für zwei- und mehrwertige, insbesondere zweiwertige Alkohole sind: 1,2- bzw. 1,3-Propylenglykol, Dipropylenglykol, 1,5-Pentamethylenglykol, 1,6-Hexamethylenglykol, 1,10-Decamethylenglykol, Glycerin, Trimethylolpropan und vorzugsweise Ethylenglykol, Diethylenglykol und 1,4-Butylenglykol. Als mehrwertige Alkohole können ferner Alkanolamine, wie Triethanolamin und Triisopropanolamin verwendet werden. Sofern zur Herstellung der Polyesterole polyfunktionelle, insbesondere trifunktionelle Verbindungen mitverwendet werden, muß deren Gehalt so gewählt werden, daß die Funktionalität der erhaltenen Polyesterole maximal 6, vorzugsweise 2 bis 4 ist.

Die Polyesterole, die einzeln oder in Form von Mischungen eingesetzt werden können, besitzen Molekulargewichte von 1000 bis 3000 und vorzugsweise 1800 bis 2500.

Vorzugsweise als Polyole verwendet werden jedoch Polyetherole, die nach bekannten Verfahren aus einem oder mehreren Alkylenoxiden mit 2 bis 4 Kohlenstoffatomen im Alkylenrest und einem Startermolekül, das 2 bis 8, vorzugsweise 2 bis 4 aktive Wasserstoffatome enthält oder durch Polymerisation von Tetrahydrofuran, hergestellt werden.

Geeignete Alkylenoxide sind beispielsweise Tetrahydrofuran, 1,3-Propylenoxid, 1,2- bzw. 2,3-Butylenoxid, Styroloxid, Epichlorhydrin und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,4- und 2,6-Toluylendiamin und 4,4'-, 2,4'- und 2,2'-Diamino-diphenylmethan. Von den Verbindungen der erwähnten Gruppe sind besonders interessant hydroxylgruppenhaltiges Polytetrahydrofuran, N,N,N',N'-Tetrakis-(2-hydroxyethyl)-ethylendiamin, N,N,N',N'-Tetrakis-(2-hydroxypropyl)-ethylendiamin, N,N,N',N'',N''-Pentakis-(2-hydroxypropyl-)ethylentriamin, Phenyldiisopropanolamin und höhere Alkylenoxidaddukte von Anilin.

Als Startermoleküle kommen ferner in Betracht Alkanolamine, wie Ethanolamin, Diethanolamin, N-Methyl- und N-Ethyl-ethanolamin, N-Methyl- und N-Ethyl-diethanolamin und Triethanolamin, Ammoniak, Hydrazin und Hydrazide. Vorzugsweise verwendet werden mehrwertige, insbesondere zwei- und/oder dreiwertige Alkohole, wie Ethylenglykol, Propylenglykol-1,2 und -1,3, Diethylenglykol, Dipropylenglykol, Butylenglykol-1,4, Hexamethylenglykol-1,6, Glycerin, Trimethylol-propan und Pentaerythrit.

Die Polyetherole besitzen Molekulargewichte von 1000 bis 8000, vorzugsweise 2000 bis 4000 und können einzeln oder als Gemische verwendet werden.

Anstelle der Polyesterole oder Polyetherole können auch Mischungen aus Polyester- und Polyätherolen eingesetzt werden, wobei das Verhältnis der Komponenten je nach den mechanischen Eigenschaften der Außenhaut und nach dem Verwendungszweck des Formkörpers in breiten Grenzen, beispielsweise im Gewichtsverhältnis von 20 : 80 bis 80 : 20 variiert werden kann.

Neben Polyolen werden zur Herstellung der lichtechten Außenhaut zusätzlich Kettenverlängerungsmittel (c) in Mengen von 1 bis 50, vorzugsweise von 5 bis 30 Mol pro Mol Polyol verwendet. Als Kettenverlängerungsmittel eignen sich polyfunktionelle, vorzugsweise di- und trifunktionelle Verbindungen mit Molekulargewichten von 60 bis 600, vorzugsweise von 60 bis 300. In Betracht kommen beispielsweise Di- und Trialkanolamine, wie Di- und Triethanolamin und vorzugsweise aliphatische Diole und Triole mit 2 bis 6 Kohlenstoffatomen, wie Ethylenglykol, Propylenglykol-1,2 oder -1,3, Butylenglykol-1,4, Hexamethylenglykol-1,6, Glycerin und Trimethylolpropan sowie niedermolekulare hydroxylgruppenhaltige Polyalkylenoxide auf Basis von

Ethylenoxid und/oder Propylenoxid und den obengenannten Startermolekülen, z.B. Di-, Tri- und Tetraethylenglykol und Di-, Tri- und Tetrapropylenglykol.

Um hochreaktive Polyurethansysteme zu erhalten, werden zur Herstellung der lichtechten Polyurethan-Außenhaut gegebenenfalls alkylsubstituierte aliphatische und/oder cycloaliphatische, primäre und/oder sekundäre Diamine (d) mit 2 bis 35, vorzugsweise 2 bis 15 Kohlenstoffatomen verwendet. Beispielhaft genannt seien als primäre und sekundäre aliphatische Diamine gegebenenfalls N,N'-dialkylsubstituierte Diamine mit 1 bis 10, vorzugsweise 1 bis 4 Kohlenstoffatomen im Alkylrest und 2 bis 12, vorzugsweise 2 bis 6 Kohlenstoffatomen im Alkylenrest z.B. Ethylendiamin, N,N'-Dimethyl-, N,N'-Diethyl-, N,N'-Dipropyl- und N,N'-Dibutylethylen-diamin, 1,2- und 1,3-Propylendiamin, 1,4-Butylendiamin, N,N'-Dimethyl-, N,N'-Diethyl-butylendiamin-1,4, 1,6-Hexamethylendiamin, N,N'-Dimethyl-, N,N'-Diethyl- und N,N'-Dibutyl-hexamethylendiamin-1,6, Octamethylen-diamin-1,8, Decamethylen-diamin, N,N'-Dimethyl-, N,N-Diethyl-, N,N'-Dipropyl- und N,N'-Dibutyl-decamethylen-diamin-1,10. Als cycloaliphatische primäre und sekundäre Diamine kommen gegebenenfalls N,N'-dialkylsubstituierte Diamine mit 1 bis 10, vorzugsweise 1 bis 4 Kohlenstoffatomen im Alkylrest und 6 bis 15, vorzugsweise 6 bis 13 Kohlenstoffatomen im Cycloalkylrest in Betracht. Beispielhaft genannt seien 1,3- und 1,4-Diamino-cyclohexan, N,N'-Dimethyl-, N,N'-Diethyl-, N,N'-Dipropyl- und N,N'-Dibutyl-1,3- bzw. -1,4-diaminocyclohexan, 1-Methyl-2,4- und -2,6-diaminocyclohexan, 1-Methyl-N,N'-diethyl-2,4- und -2,6-diaminocyclohexan, Isophoron-diamin, 2,2'-, 2,4'- und 4,4'-Diamino-dicyclohexylmethan, N,N'-Dimethyl-, N,N'-Diäthyl- und N,N'-Di-n-butyl-4,4'-diamino-dicyclohexylmethan, 3,3'-Dimethyl-4,4'-diamino-dicyclohexylmethan und 4,4'-Diamino-dicyclohexyl-(2,2)-propan. Die primären und

sekundären aliphatischen und cycloaliphatischen Diamine können einzeln oder in Form von Mischungen verwendet werden. Besonders bewährt haben sich und daher vorzugsweise verwendet werden als aliphatische Diamine, Tetramethylendiamin und Hexamethylendiamin und als cycloaliphatische Diamine Isophorondiamin, 4,4'-Diamino-dicyclohexylmethan, 3,3'-Dimethyl-4,4'-diamino-dicyclohexylmethan und Piperazin.

Gegebenenfalls kann es zweckmäßig sein, anstelle der primären aliphatischen und/oder cycloaliphatischen Diamine die entsprechenden Aldimine und/oder Ketimine zu verwenden. Geeignete Aldimine bzw. Ketimine werden beispielsweise durch Umsetzung der obengenannten primären Diamine mit Aldehyden, wie Acetaldehyd oder Butyraldehyd, bzw. Ketonen, wie Aceton, Methylethylketon oder Cyclohexanon erhalten.

Die aliphatischen und/oder cycloaliphatischen primären oder sekundären Diamine (d) werden in Mengen von 0,1 bis 50 Gew.-%, vorzugsweise von 2 bis 40 Gew.-%, bezogen auf das Gewicht der Polyole (b) und Kettenverlängerungsmittel (c) eingesetzt.

Als Katalysatoren (e) werden Verbindungen verwendet, die die Reaktion der Polyole und hydroxylgruppenhaltigen Kettenverlängerungsmittel mit den Polyisocyanaten stark beschleunigen. In Betracht kommen organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinn-dilaurat, Dibutylzinn-maleat und Dioctylzinn-diacetat sowie die entsprechenden Verbindungen von Zink,

Eisen(II), Kobalt(II), Blei(II), Kupfer(II) und Quecksilber(II), beispielsweise Zink- und Bleioctoat, Kobaltnapthenat, Eisenacetylacetonat und Quecksilberacetat. Die organischen Metallverbindungen werden allein oder vorzugsweise in Kombination mit stark basischen Aminen eingesetzt. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, Pentamethyl-diethylentriamin, Tetramethyl-diaminoethyläther, Bis-(dimethylaminopropyl)-harnstoff, Dimethylpiperazin, 1,2-Dimethylimidazol, 1-Azo-bicyclo-(3,3,0)-octan und vorzugsweise 1,4-Diaza-bicyclo-(2,2,2)-octan und Alkanolverbindungen, wie Triethanolamin, Triisopropanolamin, N-Methyl- und N-Ethyl-diethanolamin und Dimethylethanolamin.

Als Katalysatoren kommen ferner in Betracht: Tris-(dialkylaminoalkyl)-s-hexahydrotriazine, insbesondere Tris-N,N-dimethylaminopropyl)-s-hexahydrotriazin, Tetraalkylammoniumhydroxide, wie Tetramethylammoniumhydroxid, Alkalihydroxide, wie Natriumhydroxid und Alkalialkoholate, wie Natriummethylat und Kaliumisopropylat sowie Alkalisalze von langkettigen Fettsäuren mit 10 bis 20 C-Atomen und gegebenenfalls seitenständigen OH-Gruppen.

Bewährt haben sich beispielsweise auch synergistisch wirkende Katalysatorkombinationen die bestehen aus

A) mindestens einer Verbindung aus der Gruppe der Alkalihydroxide, -alkoholate, -phenolate, Alkalisalze schwacher Säuren und/oder Hexahydrotriazin-derivate und

B) mindestens einer Verbindung aus der Gruppe der organischen Zinn-, Zink- und/oder Eisen(II)verbindungen.

Die Katalysatoren oder Katalysatorkombinationen werden üblicherweise in Mengen von 0,001 bis 5 Gew.-%, vorzugsweise von 0,05 bis 3 Gew.-%, bezogen auf das Polyolgewicht, verwendet.

Den die Außenhaut bildenden Polyurethan-Systemen können ferner gegebenenfalls Hilfs- und Zusatzstoffe, wie sie üblicherweise zur Herstellung von Polyurethan-Kunststoffen Anwendung finden, einverleibt werden. In Betracht kommen beispielsweise Treibmittel, Trocknungsmittel, oberflächenaktive Stoffe, Flammschutzmittel, Porenregler, Antioxidationsmittel, Hydrolyseschutzmittel, Farbstoffe, UV-Stabilisatoren, Pigmente, Füllstoffe, Verlaufsmittel und andere Zusätze.

Nach dem erfindungsgemäßen Verfahren werden vorzugsweise Formkörper mit einer lichtechten dichten Außenhaut hergestellt. Jedoch ist es auch möglich, poröse oder mikroporöse Außenhäute zu erhalten. Zur Bildung einer porösen Außenhaut werden dem Polyurethansystem ein oder mehrere Treibmittel, die chemisch inert sind und bei Temperaturen unter 100°C sieden, einverleibt. In Betracht kommen beispielsweise gegebenenfalls halogenierte Kohlenwasserstoffe mit Siedepunkten von vorzugsweise -50 bis 50°C bei Atmosphärendruck. Im einzelnen seien beispielhaft genannt: halogenierte Kohlenwasserstoffe, wie Monochlordifluormethan, Dichlormonofluormethan, Dichlordifluormethan und Trichlorfluormethan und deren Gemische und Kohlenwasserstoffe, wie Propan, Isobutan, Pentan und Hexan sowie Dimethylether.

Die gegebenenfalls zur Anwendung kommenden Treibmittel werden in Mengen von 0,5 bis 15 Gew.-%, vorzugsweise von 5 bis 10 Gew.-%, bezogen auf 100 Teile Polyol verwendet. Zur Herstellung der vorzugsweise dichten Außenhäute müssen die Ausgangskomponenten, insbesondere die Polyole und Kettenverlängerungsmittel trocken sein. Zum Trocknen eignen sich beispielsweise feste Trocknungsmittel, wie Zeolithe und Molekularsiebe und lösliche Trocknungsmittel, wie ortho-Carbonsäureester, Acetale, Ketale und Ketimine.

Als oberflächenaktive Stoffe kommen beispielsweise Verbindungen in Betracht, die zur Unterstützung der Homogenisierung der Ausgangsstoffe dienen und gegebenenfalls auch geeignet sind, die Zellstruktur einer gegebenenfalls porösen Polyurethan-Außenhaut zu regulieren. Genannt seien z.B. Siloxan-Oxalkylen-Mischpolymerisate und andere Organopolysiloxane, oxethylierte Alkylphenole, oxethylierte Fettalkohole, Paraffinöle, Ricinusöl, Ricinolsäureester und Türkischrotöl, die in Mengen von 0,2 bis 6 Gew.-Teilen pro 100 Gew.-Teilen Polyol angewandt werden.

Geeignete Flammschutzmittel sind beispielsweise Phosphor und/oder Halogenatome enthaltende Verbindungen, die zusätzlich die Neigung zur Sprödigkeit der Polyurethan-Außenhaut verringern können und als Weichmacher fungieren, wie Trikresylphosphat, Tris-2-chlorethylphosphat, Tris-chlorpropylphosphat und Tris-2,3-dibrompropylphosphat und anorganische Flammschutzmittel, wie Antimontrioxid, Arsenoxid, Ammoniumphosphat u.a. Im allgemeinen hat es sich als vorteilhaft erwiesen, 1 bis 10 Gew.-Teile der genannten Flammschutzmittel für jeweils 100 Gew.-Teile Polyol zu verwenden.

Nähere Angaben über die obengenannten anderen üblichen Hilfs- und Zusatzstoffe sind der Fachliteratur, beispielsweise der Monographie von J.H. Saunders und K.C. Frisch "High Polymers", Band XVI, Polyurethanes, Teil 1 und 2, Verlag Interscience Publishers 1962 und 1964, zu entnehmen.

Die Polyurethanschaumstoffkerne für die Formkörper werden aus an sich bekannten Ausgangskomponenten zur Herstellung von weichen, halbharten und harten Polyurethanschaumstoffen erhalten. Rezepturen für entsprechende Polyurethanmassen werden beispielsweise im Kunststoff-Handbuch, Band VII, Polyurethane von R. Vieweg und A. Höchtlen, Carl Hanser Verlag, München, 1966, beschrieben.

Zur Herstellung der Polyurethan-Außenhaut werden die Molekulargewichte und die Funktionalität der Polyole so gewählt, daß zur Beschichtung von harten Schaumstoffkernen harte Außenhäute und zur Beschichtung von weichen Schaumstoffkernen weiche Außenhäute gebildet werden, wobei auch fließende Übergänge zwischen den einzelnen Schaumstofftypen möglich sind.

Im einzelnen werden die Formkörper nach dem erfindungsgemäßen Verfahren vorteilhafterweise wie folgt hergestellt: Das Polyol (b), das Kettenverlängerungsmittel (c), die aliphatischen und/oder cycloaliphatischen primären oder sekundären Diamine (d), der Katalysator sowie gegebenenfalls Hilfs- und Zusatzstoffe (e) werden zu einer Komponente A vereinigt. Als Komponente B werden die organischen Polyisocyanate (a) verwendet. Die Komponenten A und B, die über Kolbenpumpen so dosiert werden, daß das Verhältnis von NCO-Gruppen zu Zerewitinoff aktiven Wasserstoffatomen der Bestandteile

(b) bis (d) 0,9 bis 1,2 : 1, vorzugsweise 1 bis 1,1 : 1 beträgt, werden mit Hilfe einer Zweikomponenten-Sprühspritzmaschine mit einer Spritzpistole mit eingebautem statischen Mischer auf die gegebenenfalls mit einem Trennmittel versehenen Innenwände des offenen Formwerkzeugs aufgesprüht. Die Komponenten A und B weisen vor dem Mischen Temperaturen von ungefähr 10 bis 60°C, vorzugsweise 20 bis 40°C auf, während die Formwerkzeuge, die aus Metall oder Kunststoff bestehen können, auf Temperaturen von 20 bis 70°C, vorzugsweise 40 bis 50°C gehalten werden. Aufgrund der Lösungsmittelfreiheit und Mitverwendung von hochreaktiven primären oder sekundären aliphatischen und/oder cycloaliphatischen Diaminen zur Herstellung der Polyurethanaußenhaut fließt das Polyurethansystem von beschichteten, senkrecht stehenden Wänden nicht ab und bildet auch bei größeren Schichtdicken keine Blasen. Nach Bildung der Außenhaut, die aus einer oder mehreren, gegebenenfalls verschieden eingefärbten Schichten bestehen kann, wird das Formwerkzeug mit konventionellen Polyurethanschaumstoffsystemen auf bekannte Weise ausgeschäumt.

Die Formkörper werden erfindungsgemäß in offenen Formwerkzeugen hergestellt. Dies bedeutet, daß die Formkörper an mindestens einer Seite der Oberfläche keine lichtechte Außenhaut besitzen. Besonders vorteilhafte Ergebnisse werden beispielsweise bei Formkörpern mit quaderförmigem Habitus erzielt, bei denen die Oberfläche auf 2 bis 5 Seiten, beispielsweise die Grundfläche und eine Seitenfläche oder die 4 Seitenflächen, aus einer lichtechten Außenhaut besteht.

Die erfindungsgemäß hergestellten Formkörper finden beispielsweise Verwendung in der Automobilindustrie, für die Innenausstattung von Autos, beispielsweise als Abdeckplatten für Lenkräder und zum Auskleiden von Türen und für die

Außenausstattung, z.B. als Stoßstangen und Scheinwerfergehäuse, sowie in der Elektroindustrie als Gehäuseelemente.

Die in den Beispielen genannten Teile beziehen sich auf das Gewicht.

Beispiel 1

Komponente A:
Die Komponente A besteht aus einer Mischung von
67 Teilen eines Polyetherols auf Basis Trimethylolpropan, Propylenoxid und Ethylenoxid mit einer Hydroxylzahl von 45
24 Teilen Ethylenglykol
10 Teilen 3,3'-Dimethyl-4,4'-diaminodicyclohexylmethan
3 Teilen Dibutylzinndilaurat und
5 Teilen Zeolith T (Herst. Bayer AG, Leverkusen)

Komponente B:
Als Komponente B wird eine Mischung aus
50 Teilen eines urethangruppenhaltigen Diisocyanats auf Basis Hexamethylendiisocyanat mit einem NCO-Gehalt von 17 Gew.-% und
50 Teilen eines biuretgruppenhaltigen Polyisocyanates auf Hexamethylendiisocyanatbasis mit einem NCO-Gehalt von 23 Gew.-%
verwendet.

Mit einer Zweikomponentenspritzpistole mit statischem Mischer werden 100 Teile der Komponente A mit einer Temperatur von 25°C und 184 Teile der Komponente B mit einer Temperatur von 25°C intensiv gemischt und auf die Innenwände eines oben offenen Formwerkzeugs mit den Abmessungen 20x20x1 cm aus Aluminium, das eine Temperatur von 40°C aufweist, in einer solchen Menge aufgesprüht, daß die

Schichtdicke 0,5 mm beträgt. Die Klebfreizeit t beträgt 25 Sekunden.

In das auf diese Weise innen beschichtete Formwerkzeug füllt man anschließend 240 g einer schaumfähigen Mischung aus 96,8 Teilen eines Polyetherols mit einer Hydroxylzahl von 25 und einem Molekulargewicht von 6500
1,6 Teilen Glycerin und
1,6 Teilen Wasser als A-Komponente und
50 Teilen Roh-MDI als B-Komponente, verschließt das Formwerkzeug und läßt aufschäumen. Man erhält einen Formkörper, dessen Außenhaut die in Tabelle 2 zusammengestellten mechanischen Werte besitzt.

<u>Beispiele 2 bis 11 und Vergleichsbeispiel A</u>

Man verfährt analog den Angaben von Beispiel 1, verwendet jedoch zur Herstellung der Polyurethan-Außenhaut die in Tabelle 1 zusammengefaßten Ausgangskomponenten in den genannten Mengen (Teile).

Die mechanischen Eigenschaften der Polyurethan-Außenhaut finden sich in Tabelle 2.

Die Namen der Bestandteile wurden in Tabelle 1 wie folgt abgekürzt:

| | |
|---|---|
| Polyol 1 | trifunktionelles Polyetherol aus Propylenoxid und Ethylenoxid mit einer Hydroxylzahl von 45 |
| Polyol 2 | difunktionelles Polyetherol auf Basis Propylenoxid/Ethylenoxid mit einer Hydroxylzahl von 28 |

| | |
|---|---|
| Polyol 3 | lineares Polyesterol mit einer Hydroxylzahl von 56 |
| EG: | Ethylenglykol |
| HMDA-Hex: | 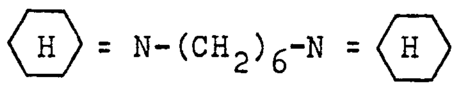 |
| HMDA | Hexamethylendiamin |
| La C 260: | 3,3'-Dimethyl-4,4'-diaminodicyclohexylmethan |
| Dicycan: | 4,4'-Diamino-dicyclohexylmethan |
| D 22: | Dibutylzinndilaurat |
| Zeolith T: | Trocknungsmittel der Firma Bayer AG, Leverkusen |
| HMDI-Urethan: | urethangruppenhaltiges Hexamethylendiisocyanat mit einem NCO-Gehalt von 17 Gew.-%, |
| HMDI-Biuret: | biuretgruppenhaltiges Hexamethylendiisocyanat mit einem NCO-Gehalt von 23 Gew.% |
| B/100A: | Mischungsverhältnis : Teile der Komponente B zu 100 Teilen der Komponente A |

Tabelle 1

| Beispiel Vergleichsbeispiel | 2 | 3 | 4 | 5 | 6 | 7 | 8 | 9 | 10 | 11 | A |
|---|---|---|---|---|---|---|---|---|---|---|---|
| Komponente A: | | | | | | | | | | | |
| Polyol 1 [Teile] | 67 | 67 | 67 | 49 | 67 | - | 38,4 | - | 50 | 50 | 50 |
| Polyol 2 [Teile] | - | - | - | - | - | - | 38,4 | - | - | - | - |
| Polyol 3 [Teile] | - | - | - | - | - | 85 | - | 85 | - | - | - |
| EG [Teile] | 24 | 24 | 24 | 26 | 24 | 28,3 | 18 | 28,3 | 17,3 | 25 | 20 |
| La C 260 [Teile] | - | - | - | - | - | - | - | - | - | 40 | - |
| HMDI-Hex [Teile] | 12 | - | - | - | 12 | 12 | - | 12 | 12 | - | - |
| HMDA [Teile] | - | - | - | 21 | - | - | - | - | - | - | - |
| Piperazin [Teile] | - | 3,8 | - | - | - | - | 3,8 | - | - | - | - |
| Dicycan [Teile] | - | - | 3,8 | - | - | - | - | - | - | - | - |
| D 22 [Teile] | 3 | 3 | 3 | 1 | 3 | 3 | 2,5 | 3 | 2,4 | 1,5 | 2,4 |
| Zeolith T [Teile] | - | 5 | 5 | 3,5 | - | - | 5 | - | - | 5 | - |
| Komponente B: | | | | | | | | | | | |
| HMDI-Urethan [Teile] | 50 | 50 | 50 | 50 | 100 | 50 | 50 | 100 | 50 | 100 | 50 |
| HMDI-Biuret [Teile] | 50 | 50 | 50 | 50 | - | 50 | 50 | - | 50 | - | 50 |
| B/100 A | 175 | 184 | 184 | 268 | 227 | 168 | 137 | 168 | 200 | 236 | 200 |
| t klebfrei [sec] | 22 | 30 | 20 | 20 | 15 | 30 | 35 | 25 | 25 | 30 | 45 |
| Bemerkung: | ← tropft nicht ab → | | | | | | | | | | tropft |

Tabelle 2: Mechanische Werte der Polyurethanaußenhaut bei Raumtemperatur (23°C)

| Beispiel Vergleichs-beispiel | Xenontest ASTM D 1925-67 YI 500h | Härte Shore D DIN 53505 | E-Modul DIN 53457 $N/mm^2$ | Weiterreiß-festigkeit DIN 53575 N/mm | Reißfe-stigkeit DIN 53504 $N/mm^2$ | Dehnung DIN 53504 % | Abrieb DIN 53516 g |
|---|---|---|---|---|---|---|---|
| 1 | 2 | 50 | 350 | 60 | 25 | 200 | 0,300 |
| 2 | 3 | 55 | 450 | 50 | 15 | 140 | 0,300 |
| 3 | 8 | 50 | 400 | 55 | 15 | 180 | 0,250 |
| 4 | 5 | 22 | 5 | 10 | 5 | 200 | 0,250 |
| 5 | 3 | 54 | 365 | 50 | 10 | 100 | 0,250 |
| 6 | 2 | 40 | 11 | 40 | 20 | 500 | 0,200 |
| 7 | 4 | 36 | 8 | 40 | 6 | 230 | 0,200 |
| 8 | 5 | 30 | 8 | 11 | 3 | 170 | 0,200 |
| 9 | 6 | 30 | 10 | 30 | 6 | 250 | 0,200 |
| 10 | 8 | 50 | 300 | 70 | 25 | 200 | 0,300 |
| 11 | 6 | 63 | 540 | 45 | 24 | 60 | 0,300 |
| A | 3 | 50 | 300 | 75 | 20 | 200 | 0,300 |

## Patentansprüche

1. Verfahren zur Herstellung von Formkörpern mit einer lichtechten Polyurethan-Außenhaut und einem -Schaumstoffkern in einem offenen Formwerkzeug, dadurch gekennzeichnet, daß man zur Bildung der Außenhaut nach dem one-shot-Verfahren in Abwesenheit von Lösungsmitteln für Polyurethane

   a) organische Polyisocyanate,
   b) Polyole,
   c) Kettenverlängerungsmittel,
   d) aliphatische und/oder cycloaliphatische primäre oder sekundäre Diamine,
   e) Katalysatoren sowie ggf. Hilfs- und Zusatzstoffe

   intensiv mischt, die Mischung auf die Innenwand des Formwerkzeugs in einer zur Bildung der Außenhaut des Formkörpers ausreichenden Schichtdicke aufbringt und danach die den Schaumstoffkern bildende schaumfähige Polyurethanmasse in das Formwerkzeug einfüllt und aufschäumen läßt.

2. Verfahren nach Anspruch 1, dadurch gekennzeichnet, daß man zur Bildung der lichtechten Polyurethan-Außenhaut die Bestandteile (b) bis (e) zu der Komponente A vereinigt, als Komponente B das organische Polyisocyanat (a) verwendet und die Komponenten A und B in einem statischen Mischer vermischt.

3. Verfahren nach Ansprüchen 1 und 2, dadurch gekennzeichnet, daß man die Mischung zur Bildung der lichtechten Polyurethan-Außenhaut auf die Innenwand des Formwerkzeugs aufsprüht.

4. Verfahren nach Anspruch 1, dadurch gekennzeichnet, daß die Schichtdicke zur Bildung der Polyurethan--Außenhaut des Formkörpers 0,5 bis 5 mm beträgt.

5. Verfahren nach Anspruch 1, dadurch gekennzeichnet, daß man als organische Polyisocyanate gegebenenfalls urethan-, biuret- oder isocyanuratgruppenhaltige aliphatische und/oder cycloaliphatische Polyisocyanate verwendet.

6. Verfahren nach Anspruch 1, dadurch gekennzeichnet, daß man als Kettenverlängerungsmittel Diole und/oder Triole mit Molekulargewichten von 60 bis 600 verwendet.

7. Verfahren nach Anspruch 1, dadurch gekennzeichnet, daß die aliphatischen und/oder cycloaliphatischen primären oder sekundären Diamine in Mengen von 0,1 bis 50 Gew.-%, bezogen auf das Gewicht der Bestandteile (b) und (c) verwendet werden.